# EUROPÄISCHE PATENTSCHRIFT

(11) **EP 1 565 335 B1**
(45) Veröffentlichungstag und Bekanntmachung des Hinweises auf die Patenterteilung: **19.01.2011**
(21) Anmeldenummer: 03779704.0
(22) Anmeldetag: 18.11.2003
(51) Int. Cl.: B60J 7/16

(54) **KRAFTFAHRZEUG**
MOTOR VEHICLE
VEHICULE AUTOMOBILE

(30) Priorität: 21.11.2002 DE 10254366
(43) Veröffentlichungstag der Anmeldung: 24.08.2005
(73) Patentinhaber: Wilhelm Karmann GmbH, 49084 Osnabrück (DE)
(72) Erfinder: BROCKHOFF, Franz-Ulrich, 49565 Bramsche (DE)
(74) Vertreter: Kronthaler, Schmidt & Coll.
(86) Internationale Anmeldenummer: PCT/DE2003/003815
(87) Internationale Veröffentlichungsnummer: WO 2004/045880

(56) Entgegenhaltungen:
- DE-A- 3 625 628
- DE-A- 3 930 343
- US-A1- 2002 105 205
- PATENT ABSTRACTS OF JAPAN Bd. 0101, Nr. 15 (M-474), 30. April 1986 (1986-04-30) -& JP 60 244620 A (TAKASHI ADACHI), 4. Dezember 1985 (1985-12-04)

## Beschreibung

Die Erfindung betrifft ein Kraftfahrzeug mit einem Dach, das zumindest einen insgesamt zu seiner Öffnung beweglichen Teil aufweist, nach dem Oberbegriff des Anspruchs 1.

Aus der US 2002/0105205 A1 oder der DE 36 25 628 A1 ist ein Fahrzeug bekannt, bei dem der hintere Dachteil insgesamt zur Freigabe einer Durchtrittsöffnung für einen vorderen Dachteil beweglich ist und der vordere Dachteil vollständig unterhalb des hinteren ablegbar ist. Hierfür muß die gesamte Masse des hinteren Dachteils bewegt werden, was entsprechend groß dimensionierte Antriebe erfordert, die den zur Verfügung stehenden Kofferraum einschränken. Da der Hauptmassenanteil des hinteren Dachteils weit von der heckseitigen Schwenkachse entfernt liegt, muß zum Aufschwenken des hinteren Dachteils ein erhebliches Drehmoment aufgebracht werden. Die Öffnung erfordert damit auch einen relativ großen Zeitaufwand.

Der Erfindung liegt das Problem zugrunde, bei einem Kraftfahrzeug mit einem Dach, das zumindest einen insgesamt zwischen einer Offen- und einer Schließstellung beweglichen vorderen Dachteil aufweist, für die Öffnung verbesserte Bedingungen zu ermöglichen.

Die Erfindung löst dieses Problem durch ein Kraftfahrzeug mit den Merkmalen des Anspruchs 1. Hinsichtlich vorteilhafter Ausgestaltungen der Erfindung wird auf die weiteren Ansprüche 2 bis 11 verwiesen.

Durch die erfindungsgemäße Ausbildung sind die zur Öffnung oder zum Schließen des beweglichen Dachteils zu bewegende Masse und das der Schwenkbewegung entgegenwirkende Trägheitsmoment des hinteren Dachteils erheblich verringert. Insbesondere muß eine Heckscheibe nicht mit verschwenkt werden. Dennoch ist die Öffnung einer großen Durchtrittsöffnung für den beweglichen Dachteil sichergestellt. Die Schwenkantriebe können verkleinert werden, wodurch der Gepäckraum vergrößerbar ist.

Eine Stabilitätssteigerung des aufschwenkenden Bereichs des hinteren Dachteils ist dann möglich, wenn die aufschwenkenden seitlichen Rahmenteile über ein vorderes Querrahmenteil miteinander verbunden sind.

Eine weitere Reduzierung von Masse und Trägheitsmoment kann durch die Verwendung von Leichtbaumaterialien, insbesondere Kunststoffen, für die Rahmenteile erreicht werden.

Für eine schnelle Öffnung und einen Erhalt des Gepäckraumes ist der bewegliche Dachteil derart geteilt, daß er durch Verlagerung von Außenbereichen zwischen einer verschmälerten und einer normalen Breite variierbar ist und in verschmälerter Breite zwischen seiner Offen- und seiner Schließstellung beweglich ist.

Insbesondere können die Außenbereiche gegen den Mittelbereich zur Einstellung der verschmälerten Stellung einschwenkbar sein.

Mit dem Vorsehen eines in den seitlichen Finnen geführten Gestänges kann die gesamte Bewegungsmechanik dort optisch unauffällig geführt sein, insbesondere dann, wenn die Finnen sowohl nach außen als auch in Richtung einer vertikalen Fahrzeuglängsmittelebene über zumindest einen weiten Bereich geschlossen sind und das Gestänge zwischen äußeren und inneren Verkleidungen geführt ist.

Bei einem derartigen Finnendach kann der bewegliche Dachteil, auch wenn er in Normalbreite die volle Breite zwischen Seitenscheiben einnimmt, durch Einwärtsverlagerung der Seitenbereiche zwischen den Finnen abgelegt werden.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische, im vorderen Bereich abgebrochene perspektivische Gesamtan- sicht eines ersten erfindungsgemäßen Kraftfahrzeugs mit einem die seitlichen Rahmenteile des hinteren Dachteils ver- bindenden Querrahmenteil bei geschlosse- nem Dach,
- Fig. 2: eine ähnliche Ansicht wie Figur 1 mit gegenüber dem mittleren Bereich aufge- schwenkten Außenbereichen des vorderen Dachteils,
- Fig. 3: eine ähnliche Ansicht wie Figur 2 bei aufgeschwenkten Rahmenteilen des hinte- ren Dachteils während der Öffnungsbewe- gung des in verschmälerter Breite be- findlichen vorderen Dachteils,
- Fig. 4: eine ähnliche Ansicht wie Fig. 3 bei vollständig abgelegtem beweglichem Dach- teil und geschlossenem Schwenkrahmen des hinteren Dachteils,
- Fig. 5: eine ähnliche Ansicht wie Fig. 3 eines alternativen hinteren Dachteils, das le- diglich aufschwenkbare Längsrahmenteile ohne ein vorne verbindendes Querrahmen- teil umfaßt,
- Fig. 6: das Dach in Stellung nach Fig. 1 in schematischer Seitenansicht,
- Fig. 7: das Dach in Stellung nach Fig. 2 in schematischer Seitenansicht,
- Fig. 8: das Dach in Stellung nach Fig. 3 in schematischer Seitenansicht,
- Fig. 9: das Dach etwa in Stellung nach Fig. 4 in schematischer Seitenansicht.

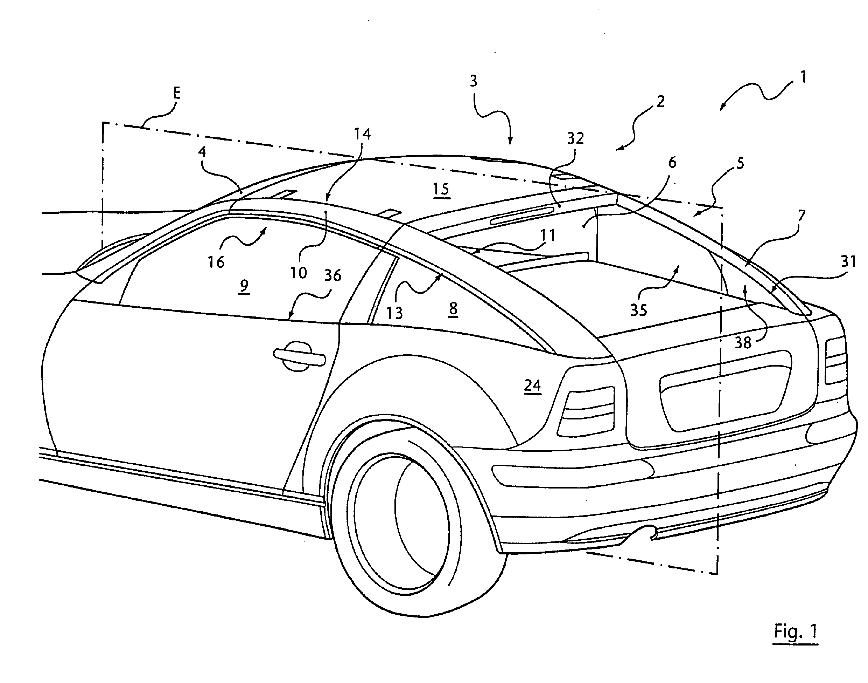

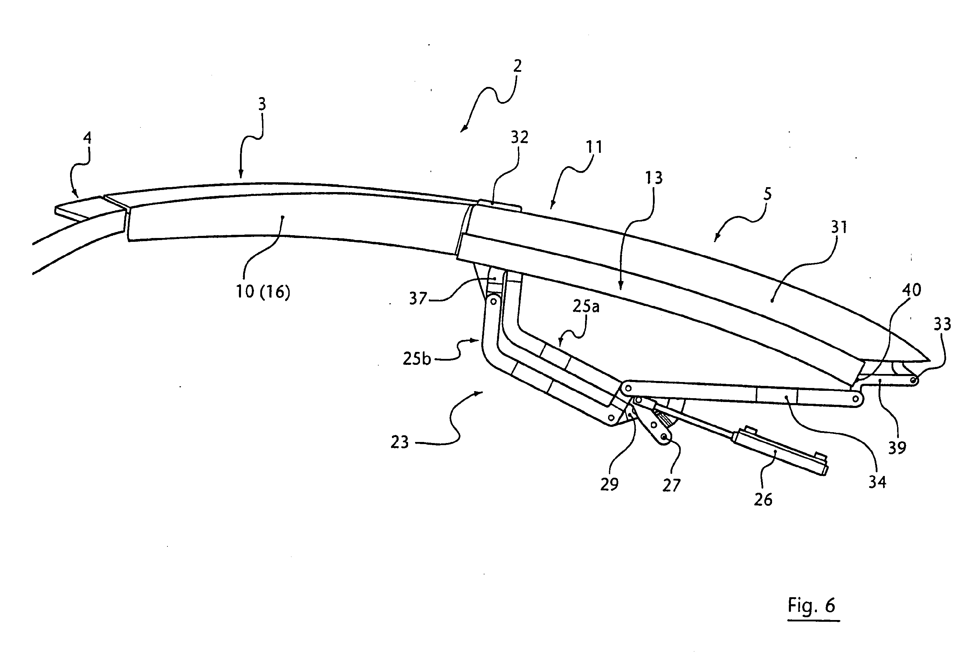

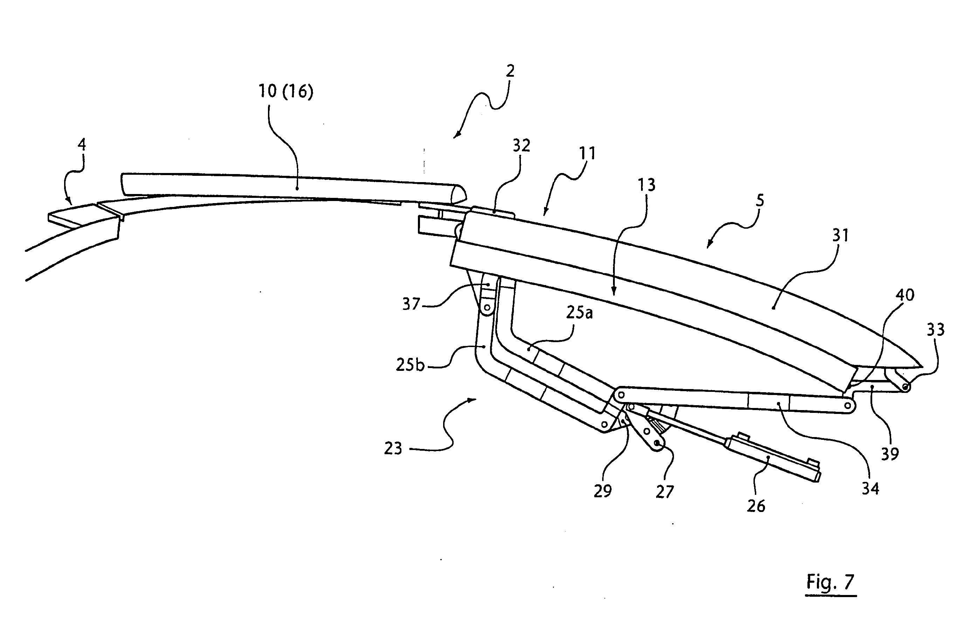

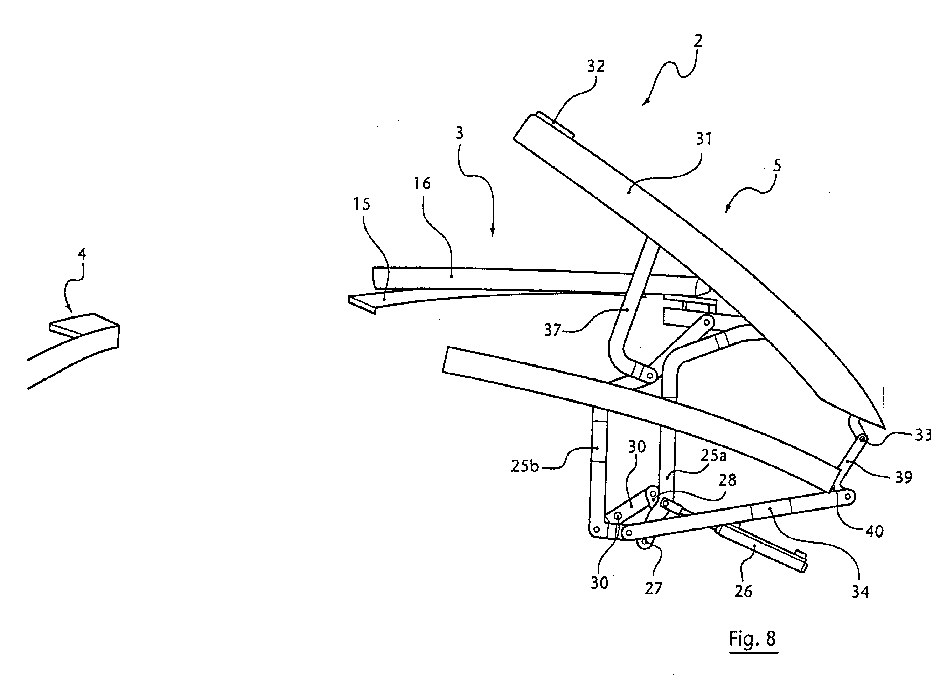

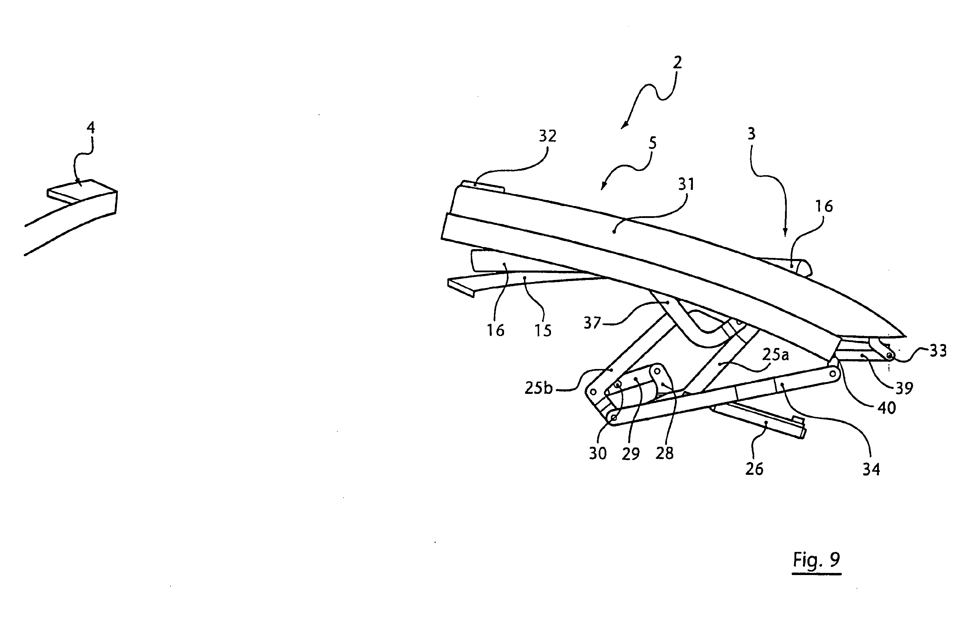

In den Figuren 1 bis 4 und 6 bis 9 ist ein erstes Ausführungsbeispiel eines erfindungsgemäßen Kraftfahrzeugs 1 dargestellt. Dieses ist mit einem Dach 2 versehen, das zumindest einen öffnungsfähigen vorderen Dachteil 3 aufweist. Auch mehrere bewegliche Dachteile 3 sind möglich. Dieser hier genau eine vordere Dachteil 3 erstreckt sich von einem Windschutz-scheibenrahmen 4 in Fahrzeuglängsrichtung zu einem hinteren Dachteil 5, der eine hier im wesentlichen vertikal stehende Heckscheibe 6 umfaßt. Der vordere, bewegliche Dachteil 3 muß nicht, wie hier gezeigt, unmittelbar an den Windschutz-scheibenrahmen 4 anschließen.

Das Dach 2 ist als sogenanntes Finnendach ausgebildet, weist also neben der relativ weit vorne angeordneten Heckscheibe 6 seitlich heckwärts laufende und im wesentlichen in Fahrzeuglängsrichtung erstreckte Spitzen 7 auf, die häufig auch als Finnen bezeichnet werden und beispielsweise außenseitig mit weiteren Seitenscheiben 8 versehen sein können. Auch eine optische Abschottung der Finnen 7 mit undurchsichtigen Verkleidungen 8, etwa auch getönten Scheiben, ist möglich. Die zwischen den Finnen 7 befindliche Heckscheibe 6 kann versenkbar sein.

Der bewegliche Dachteil 3 liegt bei geschlossenem Dach 2 im wesentlichen horizontal; er erstreckt sich im Ausführungsbeispiel über die gesamte Innenraumbreite und steht im geschlossenen Zustand in Kontakt mit Oberkanten von vorzugsweise versenkbaren Seitenscheiben 9.

Dieser Kontakt wird durch Abschnitte 10 von insgesamt mit 11 bezeichneten Rahmenteilen hergestellt. Die Abschnitte 10 können über Riegelzungen oder andere formschlüssige Verbindungs-elemente an den A-Säulen 12 des Windschutzscheibenrahmens 4 und an den C-Säulen 13 des hinteren Dachteils 5 sicherbar sein. Die Abschnitte 10 sind weiterhin an Trennfugen 14 mit einem mittleren Bereich 15 des vorderen Dachteils 3 beweglich verbunden.

Der bewegliche Dachteil 3 kann insgesamt sowohl durch mehrere starre Plattenkörper als auch von Rahmenkonstruktionen gebildet sein, die von einem flexiblen Bezug überspannt sind.

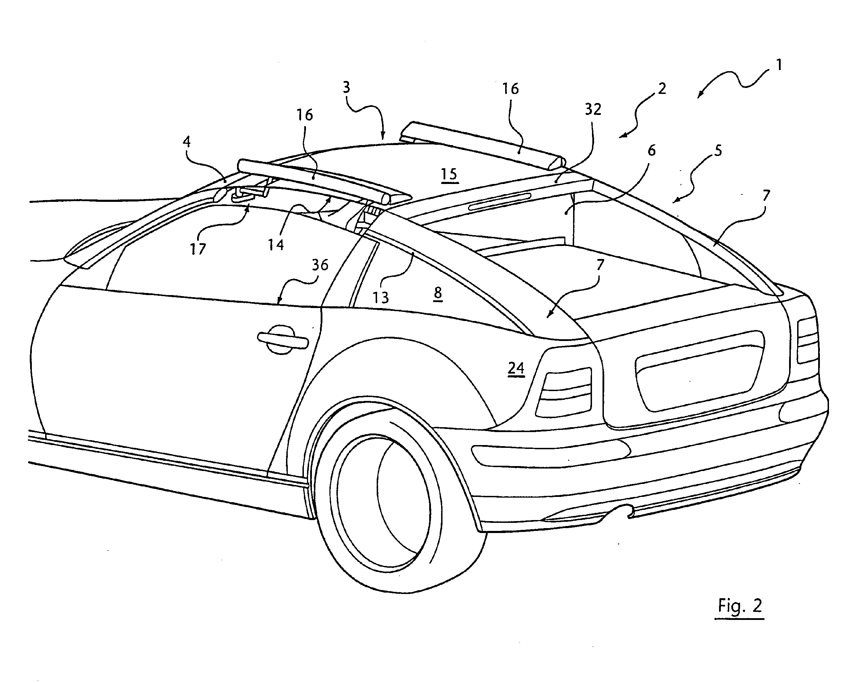

Die außen liegenden Bereiche 16 sind zwischen einer Normalstellung, in der sie fluchtend zum mittleren Bereich 15 liegen und in der der Dachteil 3 seine volle normale Breite aufweist (Fig. 1), und einer gegenüber dem mittleren Bereich einwärts verlagerten Stellung (Fig. 2) beweglich, in der der vordere Dachteil 3 verschmälert ist. Die Verlagerung ist hier eine Schwenkverlagerung und durch pro Fahrzeugseite zwei Mehrgelenke 17 bewirkt. Auch einfache Schwenkscharniere können Verwendung finden. Neben dem hier gezeigten Einschwenken der Außenbereiche 16 sind prinzipiell auch andere Verlagerungen denkbar, etwa auch ein paralleles Einfahren der Außenbereiche 16 in translatorischer Bewegung. Beim Einschwenken liegen die Außenbereiche 16 in verschmälernder Stellung um 90° verschwenkt auf dem mittleren Bereich 15.

In dieser verschmälerten Stellung sind die seitlichen Rahmenteile 11 zwischen den A-Säulen 12 und den C-Säulen 13 unterbrochen, der vordere Dachteil 3 kann heckwärts zwischen die Spitzen 7 des Finnendachs 2 geöffnet werden.

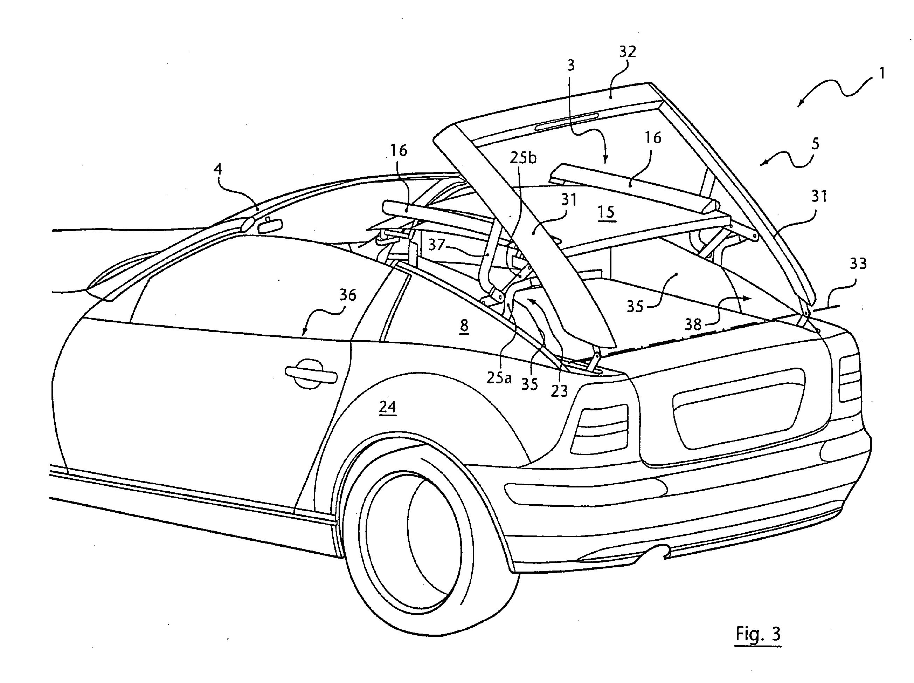

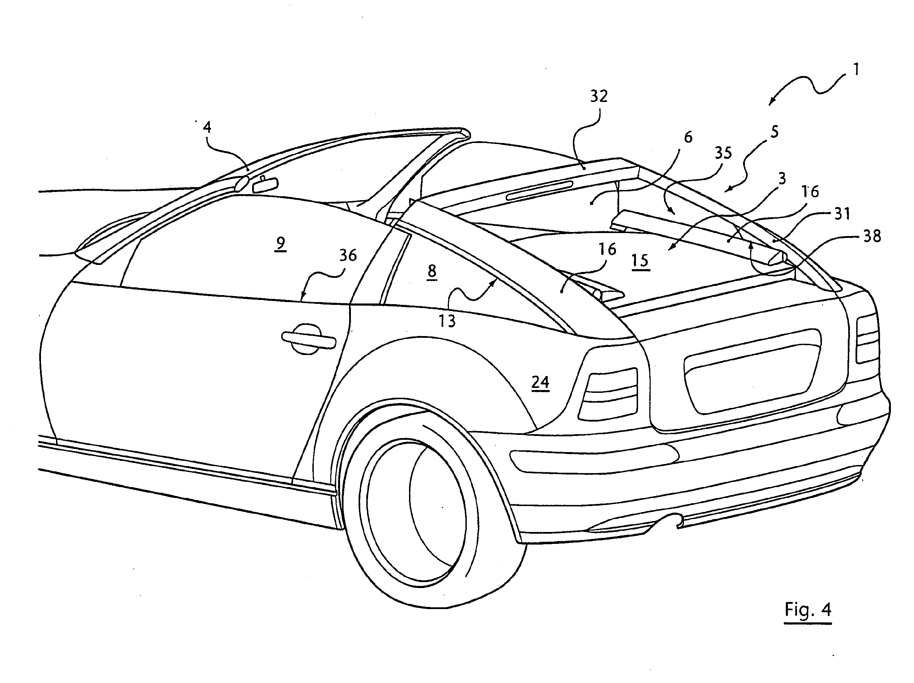

Hierzu weist der mittlere Bereich 15 des Dachteils 3 ein eigenständiges Gestänge 23 auf, an dem er gegenüber der Karosserie 24 beweglich gehalten ist. Das Gestänge 23 ist zu den Seiten durch die Außenverkleidungen 8 der Spitzen 7 des Finnendachs optisch abgedeckt. Seine Lenker 25a, 25b sind in Schlitzausnehmungen, die parallel zu den Finnen 7 liegen und sich im wesentlichen über deren gesamte Länge erstrecken, geführt (Fig. 3). Das Gestänge 23 kann durch ein beispielsweise elektrisches oder hydraulisches Antriebsorgan 26 bewegt werden. Dieses ist einenends karosseriefest gelagert und greift mit seinem freien Ende an einem Lenker 25a an. Dieser ist ebenfalls karosseriefest am Schwenkgelenk 27 gelagert und wirkt über zwei Zwischenhebel 28, 29, von denen letzterer am Gelenk 30 karosseriefest gelagert ist, auf den vorderen Lenker 25b ein. Damit ist ein Mehrgelenk gebildet, das eine zunächst im wesentlichen geradlinige Verlagerung des Dachteils 3 zu seiner Öffnung ermöglicht. Auch die Ablagestellung des geöffneten Dachteils 3 kann im wesentlichen horizontal zwischen den Finnen 7 liegen (Fig. 4), wobei die Außenbereiche 16 in der eingeschwenkten Stellung verbleiben.

Die Betätigung der Einschwenkbewegung der Außenbereiche 16 des Dachteils 3 kann ebenso wie dessen Gesamtbewegung zu seinem Öffnen oder Schließen und das Öffnen oder Schließen von Rahmenteilen 31, 32 des hinteren Dachteils 5, das unten noch näher erläutert ist, vom Armaturenbrett aus fernsteuerbar sein. Die Bewegungsabläufe können über eine Programmlogik oder durch eine mechanische Zwangssteuerung miteinander verkoppelt sein, um Fehlbedienungen zu vermeiden.

Um das Öffnen des verschmälerten Dachteils 3 zu ermöglichen und eine Durchtrittsöffnung für diesen zu schaffen, schwenkt, wie etwa in Fig. 3 gezeigt ist, ein Teil des hinteren Dachteils 5 auf. In diesem ersten Ausführungsbeispiel schwenkt dabei ein U-förmiger Rahmen 31, 32 auf. Dieser ist gebildet von seitlichen, auf den Finnen 7 aufliegenden Abdeckrahmenteilen 31, die über ein mit aufschwenkendes Querrahmenteil 32 miteinander verbunden sind. Die Rahmenteile 31, 32 können aus einem Leichtbaumaterial, etwa Kunststoff oder Leichtmetallschaum, gebildet sein. Die seitlichen Rahmenteile 31 überdecken in geschlossener Stellung den zwischen äußeren Verkleidungen 8 und zur Fahrzeuglängsmittelebene E hin weisenden inneren Verkleidungen 35 der Finnen 7 gebildeten Schlitzbereich, in dem das Gestänge 23 geführt ist. In aufgeschwenkter Stellung sind dadurch die Schlitzausnehmungen für das Gestänge 23 frei zugänglich. Das Querrahmenteil 32 überdeckt die nahezu oder vollständig vertikal stehende Heckscheibe 6 und gegebenenfalls einen im Bereich der B-Säule angeordneten Überrollschutz.

Die Schwenkbewegung verläuft um eine heckwärtige Horizontalachse 33. Die Achse 33 muß nicht karosseriefest sein, sondern ist beispielsweise über einen Koppelhebel 34 mit dem Lenker 25b verbunden, so daß sie durch Einfahren des Antriebsorgans 26 von der Fensterbrüstungslinie 36 nach oben abhebt. Ein weiteres mit dem Lenker 25b verbundenes Koppelglied 37 ist vorgesehen, um die Rahmenteile 31, 32 um die Achse 33 aufzuschwenken. Das Gestänge 23 kann sich in dieser Öffnungsstellung der Rahmenteile 31, 32 frei bewegen und damit den vorderen Dachteil 3 zwischen seiner geschlossenen und seiner geöffneten Stellung verlagern. Dadurch, daß die Innenverkleidungen 35 sich nicht bis zu den hinteren Endbereichen der Finnen 7 erstrecken, sondern gegenüber diesen jeweils einen offenen Bereich 38 belassen, können über dem horizontal zwischen den Finnen 7 abgelegten vorderen Dachteil 3 die Rahmenteile 31, 32 wieder geschlossen werden (Fig. 4). Die Anbindungen des Gestänges 23 an den Dachteil 3 kann dann in diesem offenen Bereich 38 liegen. Nach Fig. 4 ist ein Targa-Fahrzeug gebildet.

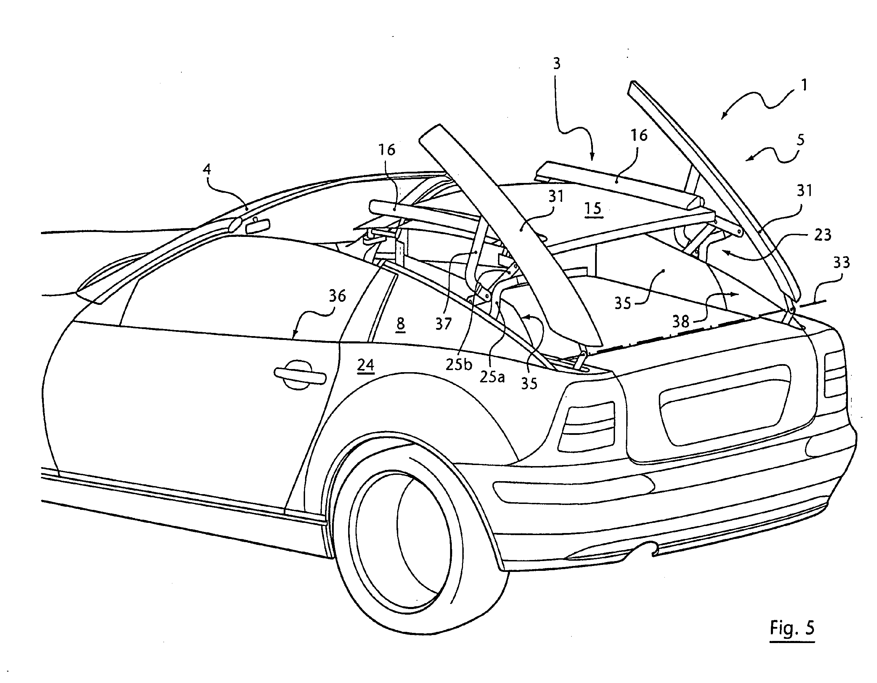

In Fig. 5 ist ein alternatives Ausführungsbeispiel dargestellt. Dort sind die seitlichen, längs erstreckten Rahmenteile 31 nicht über ein Querrahmenteil 32 miteinander verbunden. Es werden daher zur Freigabe einer Durchtrittsöffnung für den vorderen Dachteil 3 nur seitliche, längs verlaufende Rahmenteile 31 bewegt. Diese können im Bereich der Schwenkachse 33 miteinander verbunden sein, so daß auch hier nur ein Antrieb für die Schwenkbewegung erforderlich ist. Die Öffnungskinematik für die Dachteile 3 und 5 ist ansonsten unverändert.

Je nach Ausbildung des Fahrzeugs kann es auch möglich sein, daß der hintere Dachteil 5 über dem abgelegten vorderen Dachteil 3 unterhalb der Fensterbrüstungslinie 36 ablegbar ist und dann ein Voll-Cabriolet-Fahrzeug gebildet wird.

Es kann zudem im Bereich der B-Säulen und der Heckscheibe 6 ein Überrollschutz vorgesehen sein. Die Durchtrittsöffnung für den beweglichen Dachteil 3 liegt dann oberhalb des Überrollschutzes und ist dadurch von diesem nicht eingeschränkt. Eine besonders kostengünstige Lösung sieht dabei einen starren Überrollschutz vor.

## Patentansprüche

1. Kraftfahrzeug (1) mit einem Dach (2), das zumindest einen insgesamt zwischen einer Offen- und einer Schließstellung beweglichen Dachteil (3) aufweist, der sich in Schließstellung zwischen dem Nahbereich eines Windschutzscheibenrahmens (4) und einem hinteren, insbesondere starren Dachteil (5) erstreckt,
**dadurch gekennzeichnet,**
**daß** der hintere Dachteil (5) zwei seitliche, heckwärts erstreckte Spitzen (7), sog. Finnen, umfaßt, die bei geschlossenem Dach (2) oberseitig von Rahmenteilen (31) übergriffen sind, die zur Freigabe einer Durchtrittsöffnung für den beweglichen Dachteil (3) aufbeweglich sind.

2. Kraftfahrzeug nach Anspruch 1,
**dadurch gekennzeichnet,**
**daß** die Rahmenteile (31) um eine heckwärtige Achse (33) aufschwenkbar und über dem geöffneten Dachteil (3) wieder zuschwenkbar sind.

3. Kraftfahrzeug nach einem der Ansprüche 1 oder 2,
**dadurch gekennzeichnet,**
**daß** mit den seitlichen Rahmenteilen (31) des hinteren Dachteils (5) auch ein Querrahmenteil (32), das eine zwischen den Finnen (7) gelegene Heckscheibe (6) übergreift, mit auf- und zubeweglich ist.

4. Kraftfahrzeug nach einem der Ansprüche 1 bis 3,
**dadurch gekennzeichnet,**
**daß** die übergreifenden Rahmenteile (31;32) des hinteren Dachteils (5) aus einem Leichtbaumaterial gebildet sind.

5. Kraftfahrzeug nach einem der Ansprüche 1 bis 4,
**dadurch gekennzeichnet,**
**daß** das Verschwenken der Rahmenteile (31;32) über einen fernsteuerbaren Antrieb (26) bewirkbar ist.

6. Kraftfahrzeug nach Anspruch 5,
**dadurch gekennzeichnet,**
**daß** der Antrieb (26) über eine Programmsteuerung mit der Öffnungsbewegung der vorderen Außenbereiche (16) verknüpft ist.

7. Kraftfahrzeug nach einem der Ansprüche 1 bis 6,
**dadurch gekennzeichnet,**
**daß** der bewegliche Dachteil (3) in mehrere, zusammenhängende Bereiche (15;16) derart geteilt ist, daß er durch Verlagerung von Bereichen (16) zwischen einer verschmälerten und einer normalen Breite variierbar ist und in verschmälerter Breite zwischen seiner Offen- und seiner Schließstellung beweglich ist.

8. Kraftfahrzeug nach Anspruch 7,
**dadurch gekennzeichnet,**
**daß** der bewegliche Dachteil (3) in einen, bezogen auf eine vertikale Längsmittelebene (E), mittleren Bereich (15) und zwei Außenbereiche (16) geteilt ist, wobei die Außenbereiche (16) gegen den Mittelbereich (15) zur Einstellung der verschmälerten Stellung einschwenkbar sind.

9. Kraftfahrzeug nach einem der Ansprüche 1 bis 8,
**dadurch gekennzeichnet,**
**daß** der bewegliche Dachteil (3) in einer im wesentlichen horizontalen Offenstellung oberhalb eines heckseitigen, im wesentlichen horizontalen Karosseriebereichs, insbesondere einer Kofferraumhaube, ablegbar ist.

10. Kraftfahrzeug nach einem der Ansprüche 1 bis 9,
**dadurch gekennzeichnet,**
**daß** der vordere Dachteil (3) an einem Gestänge (23) selbständig beweglich gehalten und mittels dessen zwischen der Offen- und der Schließstellung verlagerbar ist.

11. Kraftfahrzeug nach Anspruch 10,
**dadurch gekennzeichnet,**
**daß** das Gestänge (23) innerhalb der seitlichen Spitzen (7) des hinteren Dachteils (5) gehalten und bei geschlossenem Dach (2) von den seitlichen Rahmenteilen (31) übergriffen ist.

## Claims

1. A motor vehicle (1) with a roof (2) having at least one roof part (3) movable as a whole between an open and a closed position which, in its closed position, extends between the area close to a wind screen frame (4) and a rear, particularly rigid roof part (5),
**characterised in that**
the rear roof part (5) includes two lateral tips (7), so-called fins, extending rearwards which, when the roof (2) is closed, are overlapped at the top by frame parts (31) that are movable into an open state for uncovering a passage opening for the movable roof part (3).

2. The motor vehicle according to Claim 1,
**characterised in that**
the frame parts (31) are pivotable into an open state about a rearward axle (33) and pivotable into a closed state above the open roof part (3).

3. The motor vehicle according to one of Claims 1 to 2,
**characterised in that**
together with the lateral roof parts (31) of the rear roof part (5), a traverse frame part (32), which overlaps a rear window (6) situated between the fins (7), is movable into an open and a closed state.

4. The motor vehicle according to one of Claims 1 to 3,
**characterised in that**
the overlapping frame parts (31; 32) of the rear roof part (5) are formed from a lightweight material.

5. The motor vehicle according to one of Claims 1 to 4,
**characterised in that**
the pivoting of the frame parts (31; 32) can be effected via a remotely controllable drive (26).

6. The motor vehicle according to Claim 5,
**characterised in that**
the drive (26) is linked to the opening movement of the front outer areas (16) via a programmed control.

7. The motor vehicle according to one of Claims 1 to 6,
**characterised in that**
the movable roof part (3) is divided into several connected areas (15; 16) such that by the displacement of areas (16) it is variable between a reduced and a normal width and is movable in its reduced width between its open and its closed position.

8. The motor vehicle according to Claim 7,
**characterised in that**
the movable roof part (3) is divided into a central area (15) with respect to a vertical longitudinal central plane (E) and two outer areas (16), wherein the outer areas (16) are pivotable towards the central area (15) for adjusting the reduced position.

9. The motor vehicle according to one of Claims 1 to 8,
**characterised in that**
the movable roof part (3) is storable in a substantially horizontal open position above a rear-side substantially horizontal car body area, especially a boot lid.

10. The motor vehicle according to one of Claims 1 to 9,
**characterised in that**
the front roof part (3) is autonomously movably held on a rodding (23) by which means it is displaceable between an open and a closed position.

11. The motor vehicle according to Claim 10,
**characterised in that**
the rodding (23) is held within the lateral tips (7) of the rear roof part (5) and is overlapped by the lateral frame parts (31) when the roof (2) is closed.

## Revendications

1. Véhicule automobile (1) avec un toit (2) présentant au moins une partie de toit (3) mobile dans l'ensemble entre une position ouverte et une position fermée et qui, en position fermée, s'étend entre la zone proche d'un cadre de pare-brise (4) et une partie de toit arrière (5) notamment rigide,
**caractérisé en ce que**,
la partie de toit arrière (5) comprend deux extrémités latérales (7) s'étendant vers l'arrière et appelées « extensions longitudinales », qui, lorsque le toit (2) est fermé, sont recouvertes par les parties de cadre (31), lesquelles sont déplaçables pour la libération d'une ouverture de passage pour la partie de toit mobile (3).

2. Véhicule automobile selon la revendication 1,
**caractérisé en ce que,**
les parties de cadre (31) peuvent être pivotées autour d'un axe arrière (33) puis remontées par pivotement pour se refermer par-dessus la partie de toit (3) ouverte.

3. Véhicule automobile selon l'une des revendications 1 ou 2,
**caractérisé en ce que**
une partie de cadre transversale (32) recouvrant une lunette arrière (6) placée entre les extensions longitudinales (7) peut également être pivotée conjointement avec les parties latérales de cadre (31) de la partie de toit arrière (5).

4. Véhicule automobile selon l'une des revendications 1 à 3,
**caractérisé en ce que**
les parties de cadre recouvertes (31 ; 32) de la partie de toit arrière (5) sont constituées d'un matériau de construction léger.

5. Véhicule automobile selon l'une des revendications 1 à 4,
**caractérisé en ce que**
le basculement des parties de cadre (31 ; 32) peut être provoqué par l'intermédiaire d'un entraînement télécommandable (26).

6. Véhicule automobile selon la revendication 5,
**caractérisé en ce que**
l'entraînement (26) est associé au mouvement d'ouverture des zones extérieures avant (16) via une commande à programme.

7. Véhicule automobile selon l'une des revendications 1 à 6,
**caractérisé en ce que**
la partie de toit mobile (3) est divisée en plusieurs zones connexes (15 ; 16) de sorte qu'en raison du déplacement des zones (16), elle est variable entre une largeur rétrécie et une largeur normale et est mobile dans la largeur rétrécie entre sa position ouverte et sa position fermée.

8. Véhicule automobile selon la revendication 7,
**caractérisé en ce que**
la partie de toit mobile (3) est divisée en une zone centrale (15) par rapport à un plan médian longitudinal vertical (E) et deux zones extérieures (16), les zones extérieures (16) pouvant être rentrées par pivotement contre la zone centrale (15) pour le réglage de la position rétrécie.

9. Véhicule automobile selon l'une des revendications 1 à 8,
**caractérisé en ce que**
la partie de toit mobile (3) peut être déposée dans une position ouverte substantiellement horizontale au-dessus d'une zone de carrosserie arrière substantiellement horizontale, en particulier un capot de coffre à bagages.

10. Véhicule automobile selon l'une des revendications 1 à 9
**caractérisé en ce que**
la partie de toit avant (3) est maintenue de façon mobile et autonome sur une tringlerie (23) et peut être déplacée à l'aide de cette dernière entre la position ouverte et la position fermée.

11. Véhicule automobile selon la revendication 10,
**caractérisé en ce que**
la tringlerie (23) est maintenue à l'intérieur des extrémités latérales (7) de la partie de toit arrière (5) et est recouverte par les parties de cadre (31) latérales lorsque le toit (2) est fermé.
